# EUROPEAN PATENT SPECIFICATION

(11) **EP 2 564 037 B1**
(45) Date of publication and mention of the grant of the patent: **20.08.2014**
(21) Application number: 11719849.9
(22) Date of filing: 12.04.2011
(51) Int. Cl.: F01L 1/14, F01L 1/16, F01L 13/06, F02D 13/02

(54) **CONTROL ARRANGEMENT FOR A GAS EXCHANGE VALVE IN A PISTON ENGINE**
STEUERANORDNUNG FÜR EIN GASAUSTAUSCHVENTIL BEI EINEM KOLBENMOTOR
AGENCEMENT DE COMMANDE POUR SOUPAPE D'ÉCHANGE GAZEUX DANS UN MOTEUR À PISTON

(30) Priority: 30.04.2010 FI 20105469
(43) Date of publication of application: 06.03.2013
(73) Proprietor: Wärtsilä Finland Oy, 65380 Vaasa (FI)
(72) Inventor: NIINIKANGAS, Saku, FI-65100 Vaasa (FI); SUNDSTEN, Magnus, FI-65610 Korsholm (FI)
(74) Representative: Berggren Oy Ab
(86) International application number: PCT/FI2011/050313
(87) International publication number: WO 2011/135162

(56) References cited:
- EP-A1- 2 019 189
- EP-A1- 2 143 895
- WO-A1-2008/000899
- DE-A1- 4 134 657
- US-A1- 2003 213 449

## Description

### Technical field

The present invention relates to a control arrangement for a gas exchange valve in a piston engine according to the preamble of claim 1.

### Background art

Modern compression ignited piston engines are commonly provided with a supercharger, usually a turbocharger. Turbocharger arrangement is specifically advantageous since it utilizes energy of the exhaust gas of the engine. In order to minimise emissions from a turbocharged diesel engine the timing of the inlet valves needs to be such that the valve is closed early before the bottom dead centre of the piston, while the boost pressure is raised accordingly so as to get a sufficient amount of air into the cylinder. Hereby it is possible to increase the output and efficiency of the engine. However, in practise a turbocharger, the compressor of which being operated with the exhaust gas turbine, tends to be inefficient at low load operation conditions of the engine, since with low engine loads the boost pressure of the turbocharger is still relatively low.

The operation of a turbocharger is influenced by the characteristics and adaptation of the interrelated compressor and turbine. Using high pressure ratios in the compressor i.e. using substantially high charge pressure in the intake system of the engine is beneficial. The operation of the compressor part of the turbocharger is restricted on one hand by the limit that corresponds to maximum flow capacity of the compressor and on the other hand by a so called surge margin. Surging of the compressor is detrimental to the operation of the engine, since the pressure and flow of the combustion air supplied to the engine will decrease as soon as the compressor surges.

WO 2008/000899A1 shows an arrangement for adjusting the closing moment of a gas exchange valve of a combustion engine making it possible to provide a delay in the closing of the valve so as to comply with different load situations of the engine, specifically low load situations, whereby the cylinders are not provided with enough air for self-ignition to take place during the compression stroke. This is specifically true as regards engines charged by high pressure such as two-stage turbo charged engines during engine start and during load variations. In engines of this kind higher pressures in combination with sharper or shorter cam nose forms are utilised resulting in charging action taking place in shorter time respectively. Hence, the opening times of the inlet valves under normal load of the engine are not long enough for such special situations whereby a delay function should be selectively available.

Depending on different engines and load situations it would be of advantage to be able to further adjust the amount of air to be supplied into the cylinder by variable timing of the operation of a gas exchange valve respectively in view of still higher requirements regarding emissions and efficiency of the engine. The arrangement of WO 2008/000899A1 does not provide sufficient possibilities in this respect. It is therefore an object of the invention to provide a further improved control arrangement for gas exchange in a piston engine, which solves the above mentioned and other problems of the prior art.

### Disclosure of the invention

The objects of the invention can be achieved as is disclosed in claim 1 and more closely in the other claims. According to the invention the discharge conduit is provided with electronically controlled valve means for adjustably determining the exact time of the releasing of pressure in said chamber space. Hereby the time of opening of the valve means and, thus, the start for the closing movement of the gas exchange valve and the delay provided for keeping it open can be freely selected so as to comply with the operating conditions of the engine in each case.

In practice the electronically controlled valve means are with advantage responsive to a control signal from a control unit arranged to adjust the closing of the gas exchange valve as desired. Therefore one or more physical parameters relating to the load conditions of the engine, e.g. the operating speed of the engine, are measured and input to the control unit to be compared with preset values for said parameters, and on the basis of said comparison measures the control unit is arranged to provide the control signal for opening the valve means thereby allowing flow of hydraulic medium from the chamber space through the discharge conduit.

The discharge conduit can be further provided with a flow throttling device located downstream of the valve means, and the throttling device is with advantage controlled by the control unit for the throttling effect. By means of a throttling device of this kind the speed of hydraulic medium flowing through the discharge conduit can be adjusted. Thus, the movement of the piston device and as a consequence also the closing movement of the gas exchange valve can be regulated and selected according to need, once the closing movement of the gas exchange valve has first been started by means of the electronically controlled valve means.

According to another embodiment of the invention the piston device is in force transmission connection with the camshaft via a guide portion. Further, the discharge conduit is provided with a valve device operationally independent on the electronically controlled valve means and the operational mode of which is dependent on the position of the guide portion with respect to the body part. For this purpose the discharge conduit is arranged to branch and the valve device is arranged in a different branch than the electronically controlled valve means. This arrangement provides a reliable solution in case of malfunction of any kind of the electronically controlled valve means, and specifically the electronic control relating thereto.

The invention makes it possible to improve the optimising of the engine performance for a wide load and revolution range by providing versatile possibilities for adjusting the closing of a gas exchange valve of an engine according to need. The arrangement according to the invention is simple and reliable.

### Brief Description of Drawings

In the following, the invention is described in more detail, by way of example, with reference to the appended schematic drawings, in which
Figure 1 shows a piston engine and a skeleton diagram of its valve mechanism;
Figure 2 shows a control arrangement according to the invention in an inoperative state;
Figure 3 shows a control arrangement according to the invention during the opening phase;
Figure 4 shows a control arrangement according to the invention during the closing phase;
Figure 5 shows a second control arrangement according to the invention during the closing phase; and
Figure 6 shows a relative opening curve of the valve.

### Detailed Description of Drawings

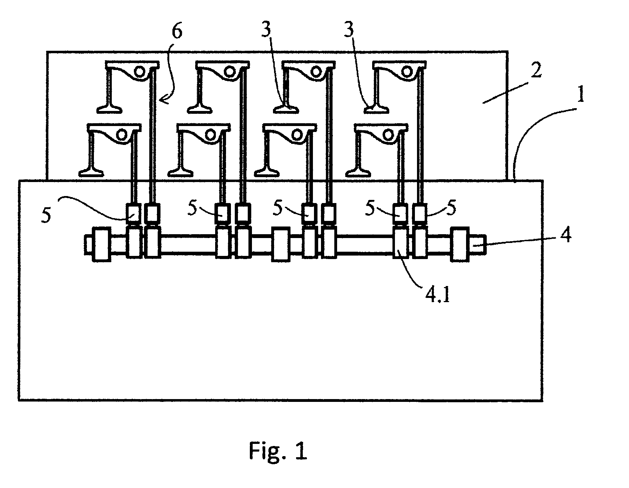

Figure 1 shows a simplified schematic view of a piston engine 1 as far it is relevant to the understanding of the invention. The gas exchange of the cylinders (not shown) in the piston engine 1 is carried out under the control of gas exchange valves 3 located on a cylinder head 2. The gas exchange valves 3 operate through a mechanism and are typically driven by the camshaft 4 of the engine and guided by cam profiles 4.1. The force transmission connection between each valve mechanism 6 and the camshaft 4 is realised by a control arrangement 5.

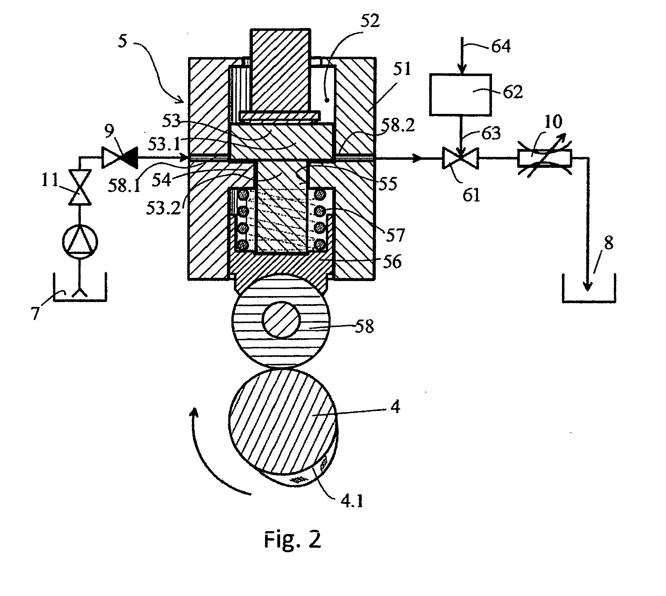

A first embodiment of the control arrangement 5 is shown in more detail in Figures 2 - 4, of which Figure 2 shows it in an inoperative state, whereby the gas exchange valve 3 (not shown) in connection therewith is closed. The control arrangement 5 comprises a body part 51, which is typically attached to the engine body. The body part 51 is provided with a chamber 52, in which a piston device 53 is arranged on the first side to be movable in the direction of its longitudinal axis. The intermediate part of the chamber 52 is provided with a partition wall 54 with a cylindrical opening 55 arranged at the middle axis of the chamber. The piston device 53 comprises a first portion 53.1, the diameter of which corresponds to the diameter of the chamber 52, and a second portion 53.2, which corresponds to the diameter of the opening 55 in the partition wall being smaller than the diameter of the chamber. The second portion 53.2 of the piston device extends in the body part 51 through the opening 55 into the chamber 52 located on the other side of the partition wall 54. The thickness of the partition wall in the direction of the longitudinal axis of the piston device is dimensioned so as to operate as a guiding element for the second portion 53.2 of the piston device. The partition wall 54 dividing the chamber 52 together with the first portion 53.1 of the piston device provide on the first side of the chamber 52 a chamber space 59, the volume of which increases as the piston device 53 moves in the opening direction of the gas exchange valve 3, i.e. away from the camshaft 4

On the other side of the partition wall 54 in the chamber 52 there is arranged a guide portion 56 as well as a spring 57.In addition the guide portion 56 is provided with a roller 58, which moves along the cam profile 4.1 while the camshaft 4 rotates. The spring 57 is adapted between the guide portion 56 and the partition wall 54 to press the guide portion 56 towards the camshaft 4 and to keep the roller 58 in contact with the cam profile 4.1 of the camshaft 4. On the first side of the chamber 52, in the vicinity of the partition wall 54, there is arranged a connection for hydraulic medium, comprising a feed conduit 58.1 and a discharge conduit 58.2, both opening to the chamber space 59.

The feed conduit 58.1 is in connection with a source 7 of hydraulic medium, which in an engine may also be a normal forced lubrication system. The feed conduit 58.1 is provided with a shut-off valve 11 and a one-way valve 9. By means of the shut-off valve 11 the feed conduit 58.1 may be connected to the chamber space 59 or disconnected from it, depending on whether the aim is to use the control arrangement for the delayed closing of the gas exchange vaive according to the invention or not. Owing to the one-way valve 9 the control arrangement does not cause any pulsations in the source of hydraulic medium. This is of special importance when lubricating oil is used as a hydraulic medium.

The discharge conduit 58.2 is in connection with a return system 8 for hydraulic medium, which at simplest may be arranged to open to the inner space of the engine, whereby the lubricating oil used as hydraulic medium is allowed to flow down to the oil sump of the engine. The discharge conduit 58.2 is provided with electronically controlled valve means 61 for adjustably determining the exact time of the releasing of pressure in the chamber space 59. The electronically controlled valve means 61 are responsive to a control signal 63 from a control unit 62 arranged to adjust the closing of the gas exchange valve 3 to comply with the operating conditions of the engine in each case. For this purpose one or more physical parameters relating to the load conditions of the engine, e.g. the operating speed of the engine, are measured and input 64 to the control unit 62, in which they are compared with preset values for said parameters. On the basis of said comparison measures the control unit 62 is then arranged to provide control signals 63 for opening and closing the valve means 61.

In this embodiment the discharge conduit 58.2 is further provided with an adjustable flow throttling device 10 located downstream of the electronically controlled valve means 61. Also the throttling device 10 can with advantage be controlled by the control unit 62 for the throttling effect.

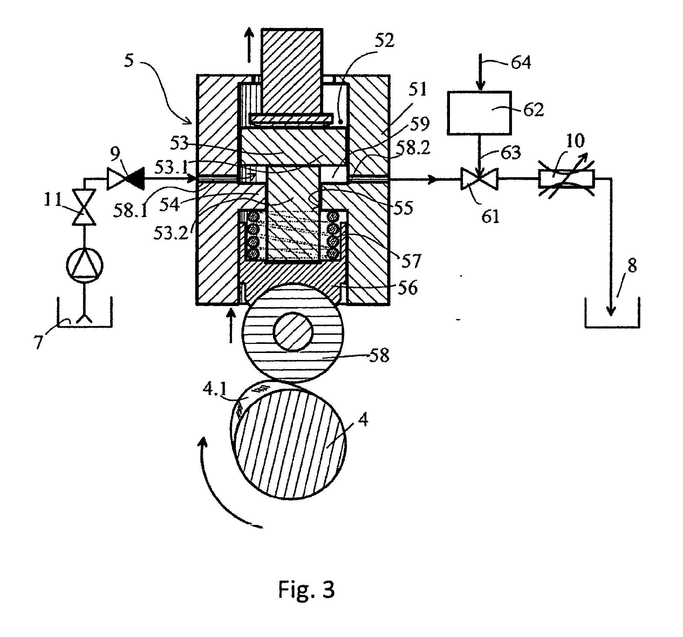

Figure 3 illustrates a situation, in which the cam profile 4.1 of the camshaft 4 has already started the lift of the piston device 53, whereby also the gas exchange valve 3 has started to open as well. Hydraulic medium, such as lubricating oil, is fed from the source 7 of hydraulic medium through the one-way valve 9 into the chamber space 59, the volume of which increases as the piston device 53 moves in the opening direction of the gas exchange valve. Then, the gas exchange valve opens, determined by the shape of the cam profile 4.1, and simultaneously the chamber space 59 is filled with hydraulic medium. Thus, the opening phase of the valve is actuated by an entirely mechanical force transmission connection and the effect of the hydraulic medium will not become apparent until at the closing phase. After the cam profile 4.1 has exceeded its peak, while the camshaft 4 is rotating, the direction of movement of the piston device 53 changes.

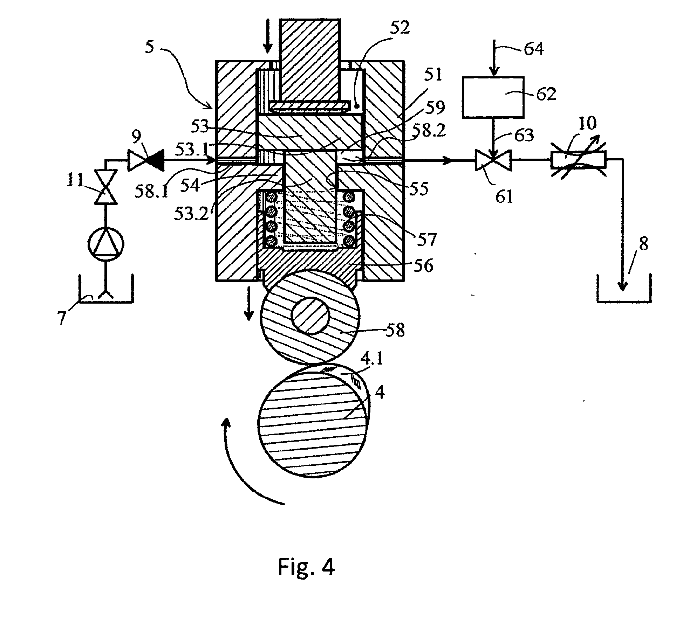

In Figure 3 the piston device 53 has moved upwards, whereas in Figure 4 the direction of movement changes downwards, i.e. toward the camshaft 4. Now the chamber space 59 contains hydraulic medium and the discharge thereof is determined by means of the electronically controlled valve means 61 so that its opening starts the releasing of pressure in the chamber space 59 allowing the piston device 53 to start moving downwards in the figure. This starts also closing of the gas exchange valve 3. Due to the electronic control the time of opening of the valve means 61 and, thus, the start for the closing movement the gas exchange valve 3 and the delayed opening time can be freely selected so as to comply with the operating conditions of the engine in each case.

In addition, due to the throttling device 10 and the possibility to adjust the throttling effect the speed of the flow of hydraulic medium out from the chamber space 59 through the discharge conduit 58.2 can also be regulated. This affects the speed of the movement of the piston device 53 and consequently also the closing movement of the gas exchange valve 3, which thus can be adjusted and selected according to need once the closing of the gas exchange valve 3 has been started by means of the electronically controlled valve means 61. At this stage the guide portion 56 follows the cam profile 4.1 of the camshaft 4, and specifically the basic circle thereof, but the piston device 58 will return to its initial position in proportion as hydraulic medium is discharged from the chamber space 59.

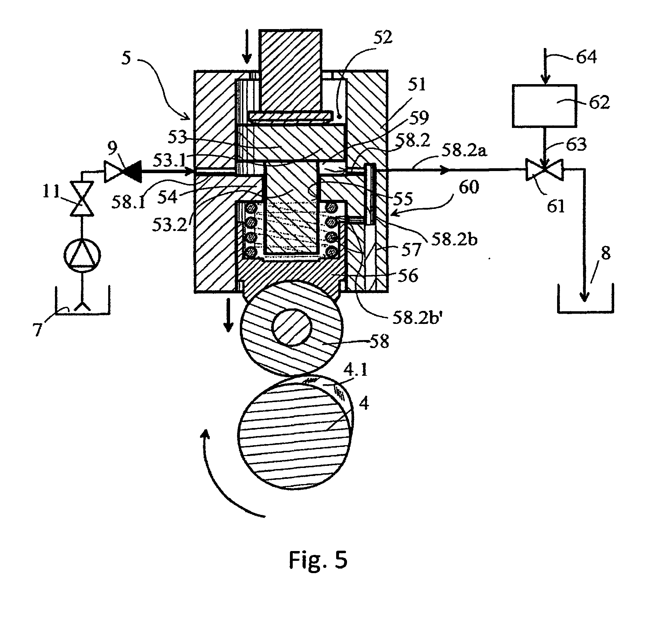

Figure 5 shows another embodiment according to the invention, the structure of which differs from the one shown in Figures 2 - 4 mainly so that it is additionally provided with a valve device 60 for controlling the discharge of hydraulic medium from the chamber space 59. The operational mode of the valve device 60 is dependent on the position of the guide portion 56 with respect to the body part 51. For this purpose the discharge conduit 58.2 is arranged to branch so that the electronically controlled valve means 61 is arranged in a first branch 58.2a and the valve device 60 is arranged in a second branch 58.2b. Thus it will be understood that the valve device 60 is in this case operationally independent on the electronically controlled valve means 61.

As shown in Figure 5 the discharge conduit branch 58.2b for hydraulic medium is in connection with the other side of the partition wall 54 in the chamber 52 so that it opens to the space at a distance from the partition wall 54.The guide portion 56 covers the discharge conduit 58.2b, while the control arrangement is in an inoperative state. The idea of this embodiment is that the direction of movement of the piston device 53 changes after the cam profile 4.1 has exceeded its peak, but primarily its movement does not start until the guide portion 56 has passed by the opening 58.2b'. This moment determines the latest time for both the start of the downward movement (in the figure) of the piston device 53 and the closing movement of the gas exchange valve 3. The hydraulic medium flowing to the other side of the chamber 52 may be utilised for lubricating the bearings of the roller 58.

Independent on the above closing process, however, in case one wishes to select an earlier start for the closing of the gas exchange valve 3 to make the selected delay shorter, it can always be affected by means of the electronically controlled valve means 61, possibly complemented by means of the adjustable throttling device 10 (not shown in Figure 5).

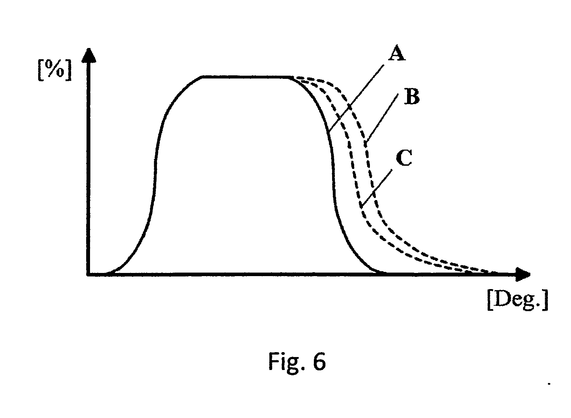

Figure 6 shows the relative opening curve of the gas exchange valve as a function of the cam angle of the engine in accordance with the embodiment of Figure 5. Curve A shows a situation, in which hydraulic medium is not led at all to the chamber space 59, whereby the valve control is carried out merely determined by the cam profile. Curve B shows a situation, in which hydraulic medium is led to the chamber space 59, while the piston device 53 moves in the opening direction of the valve, and its outflow from the chamber space 59 is determined by the valve device 60. Finally the curve C shows a situation in which the start for releasing of pressure in the chamber space 59 occurs earlier affected by means of the electronically controlled valve means 61.

According to the invention, it is thus possible to provide closing of the gas exchange valve later than normally e.g. in different load situations of the engine. The delay can be freely selected according to need so that by means of the electronically controlled valve means 61 the starting time for ending the delay can be determined and the remaining time until the gas exchange valve 3 is fully closed can be affected by the throttling device 10. The embodiment according to Figure 5 provides a reliable solution in case of malfunction of the electronic control relating to the electronically controlled valve means 61.

The invention is not limited to the shown embodiments, but several variations are conceivable within the scope of the appended claims.

## Claims

1. A control arrangement (5) for a gas exchange valve (3) in a piston engine (1) adapted between the camshaft (4) of the engine and the valve mechanism, which control arrangement comprises a body part (51) and a chamber (52) arranged therein, into which chamber a connection for hydraulic medium opens and in which a piston device (53) is movably arranged to be in mechanical force transmission connection with the camshaft and the valve mechanism at least for opening the valve (3), the connection for hydraulic medium comprising separately a feed conduit (58.1) and a discharge conduit (58.2) for hydraulic medium both opening to a chamber space (59) in the chamber (52), which space increases as the piston device (53) moves in the opening direction of the valve, whereby for providing a delay of the closing of the gas exchange valve (3) hydraulic medium is arranged to be fed into said space (59), when the valve is being opened, the releasing of pressure in said chamber space (59) determining closing of the gas exchange valve (3), the discharge conduit (58.2) being provided with electronically controlled valve means (61) for adjustably determining the exact time of the releasing of pressure in said chamber space (59), **characterised in that** the discharge conduit (58.2) is provided with a valve device (60) operationally independent on the electronically controlled valve means (61).

2. A control arrangement according to claim 1, **characterised in that** said electronically controlled valve means (61) are responsive to a control signal (63) from a control unit (62) arranged to adjust the closing of the gas exchange valve (3) to comply with the operating conditions of the engine in each case.

3. A control arrangement according to claim 2, **characterised in that** one or more physical parameters relating to the load conditions of the engine are measured and input (64) to the control unit (62) to be compared with preset values for said parameters and that on the basis of said comparison measures the control unit (62) is arranged to provide the control signal (63) for opening the valve means (61).

4. A control arrangement according to claim 2 or 3, **characterised in that** the discharge conduit (58.2) is further provided with a flow throttling device (10) located downstream of the valve means (61).

5. A control arrangement according to claim 4, **characterised in that** the throttling device (10) is controlled by the control unit (62) for the throttling effect.

6. A control arrangement according to any one of the preceding claims, **characterised in that** the piston device (53) is in force transmission connection with the camshaft (4) via a guide portion (56) and that the discharge conduit (58.2) is provided with a valve device (60) operationally independent on the electronically controlled valve means (61) and the operational mode of which is dependent on the position of the guide portion (56) with respect to the body part (51).

7. A control arrangement according to claim 6, **characterised in that** the discharge conduit (58.2) is arranged to branch and that the valve device (60) is arranged in a different branch than the electronically controlled valve means (61).

## Patentansprüche

1. Steueranordnung (5) für ein Gasaustauschventil (3) in einem Kolbenmotor (1), die zwischen der Nockenwelle (4) des Motors und dem Ventilmechanismus eingerichtet ist, wobei die Steueranordnung einen Körperteil (51) und eine darin eingerichtete Kammer (52) umfasst, zu welcher Kammer sich ein Anschluss für ein Hydraulikmedium öffnen und worin eine Kolbenvorrichtung (53) so beweglich eingerichtet ist, dass sie in einer mechanischen Kraftübertragungsverbindung mit der Nockenwelle und dem Ventilmechanismus steht, um das Ventil (3) wenigstens zu öffnen, wobei der Anschluss für das Hydraulikmedium gesondert eine Zufuhrleitung (58.1) und eine Ablassleitung (58.2) für das Hydraulikmedium umfasst, die sich beide in einen Kammerraum (59) in der Kammer (52) öffnen, welcher Raum größer wird, wenn sich die Kolbenvorrichtung (53) in die Öffnungsrichtung des Ventils bewegt, wobei zur Bereitstellung einer Verzögerung des Schließens des Gasaustauschventils (3) Hydraulikmedium in den Raum (59) geführt wird, wenn das Ventil geöffnet wird, wobei die Entlastung des Drucks in dem Kammerraum (59) das Schließen des Gasaustauschventils (3) bestimmt, wobei die Ablassleitung (58.2) mit einem elektronisch gesteuerten Ventilmittel (61) versehen ist, um den genauen Zeitpunkt der Entlastung des Drucks in dem Kammerraum (59) verstellbar zu bestimmen, **dadurch gekennzeichnet, dass** die Ablassleitung (58.2) mit einer Ventilvorrichtung (60) versehen ist, die betrieblich von dem elektronisch gesteuerten Ventilmittel (61) unabhängig ist.

2. Steueranordnung nach Anspruch 1, **dadurch gekennzeichnet, dass** das elektronisch gesteuerte Ventilmittel (61) auf ein Steuersignal (63) von einer Steuereinheit (62) anspricht, die eingerichtet ist, um das Schließen des Gasaustauschventils (3) so zu regulieren, dass es in jedem Fall den Betriebsbedingungen des Motors entspricht.

3. Steueranordnung nach Anspruch 2, **dadurch gekennzeichnet, dass** ein oder mehr physikalische Parameter im Zusammenhang mit den Belastungsbedingungen des Motors gemessen werden und zum Vergleich mit voreingestellten Werten für diese Parameter in die Steuereinheit (62) eingegeben werden (64), und dass die Steuereinheit (62) so ausgeführt ist, dass sie das Steuersignal (63) zum Öffnen des Ventilmittels (61) auf Basis dieser Vergleichsmessungen bereitstellt.

4. Steueranordnung nach Anspruch 2 oder 3, **dadurch gekennzeichnet, dass** die Ablassleitung (58.2) ferner mit einer Durchflussdrosselungsvorrichtung (10) versehen ist, die sich stromabwärts von dem Ventilmittel (61) befindet.

5. Steueranordnung nach Anspruch 4, **dadurch gekennzeichnet, dass** die Drosselungsvorrichtung (10) hinsichtlich der Drosselwirkung durch die Steuereinheit (62) gesteuert wird.

6. Steueranordnung nach einem der vorhergehenden Ansprüche, **dadurch gekennzeichnet, dass** die Kolbenvorrichtung (53) über einen Führungsabschnitt (56) in einer Kraftübertragungsverbindung mit der Nockenwelle (4) steht, und dass die Ablassleitung (58.2) mit einer Ventilvorrichtung (60) versehen ist, die betrieblich von dem elektronisch gesteuerten Ventilmittel (61) unabhängig ist, und deren Betriebsmodus von der Position des Führungsabschnitts (56) in Bezug auf den Körperteil (51) abhängt.

7. Steueranordnung nach Anspruch 6, **dadurch gekennzeichnet, dass** die Ablassleitung (58.2) so ausgeführt ist, dass sie sich verzweigt, und dass die Ventilvorrichtung (60) in einem anderen Zweig als das elektronisch gesteuerte Ventilmittel (61) angeordnet ist.

## Revendications

1. Agencement de commande (5) pour une soupape d'échange gazeux (3) dans un moteur à pistons (1) adapté entre l'arbre à cames (4) du moteur et le mécanisme de soupape, lequel agencement de commande comprend une partie de corps (51) et une chambre (52) agencée à l'intérieur, dans laquelle une connexion pour un fluide hydraulique s'ouvre et dans laquelle un dispositif de pistons (53) est agencé de façon mobile pour être en liaison de transmission de force mécanique avec l'arbre à cames et le mécanisme de soupape au moins pour ouvrir la soupape (3), la connexion pour le fluide hydraulique comprenant séparément une tubulure d'alimentation (58.1) et une tubulure d'évacuation (58.2) pour le fluide hydraulique ouvrant toutes deux vers un espace de chambre (59) dans la chambre (52), lequel espace augmente lorsque le dispositif de pistons (53) se déplace dans la position d'ouverture de la soupape, sur quoi, pour fournir une temporisation de fermeture de la soupape d'échange gazeux (3), du fluide hydraulique est agencé pour être alimenté dans l'espace (59), lorsque la soupape est en cours d'ouverture, la libération de pression dans l'espace de chambre (59) déterminant la fermeture de la soupape d'échange gazeux (3), la tubulure d'évacuation (58.2) étant dotée d'un moyen de soupape commandé électroniquement (61) pour déterminer de façon ajustable le temps exact de libération de pression dans l'espace de chambre (59), **caractérisé en ce que** la tubulure d'évacuation (58.2) est dotée d'un dispositif de soupapes (60) indépendant du moyen de soupape commandé électroniquement (61) sur le plan fonctionnel.

2. Agencement de commande selon la revendication 1, **caractérisé en ce que** le moyen de soupape commandé électroniquement (61) répond à un signal de commande (63) d'une unité de commande (62) agencée pour ajuster la fermeture de la soupape d'échange gazeux (3) pour être conforme aux conditions de fonctionnement du moteur dans chaque cas.

3. Agencement de commande selon la revendication 2, **caractérisé en ce qu'**un ou plusieurs paramètre(s) physique(s) relatif(s) aux conditions de charge du moteur est/sont mesuré(s) et entré(s) (64) dans l'unité de commande (62) pour être comparé (s) à des valeurs préréglées pour ce(s) paramètre(s) et qu'en se basant sur les mesures de comparaison, l'unité de commande (62) est agencée pour fournir le signal de commande (63) pour ouvrir le moyen de soupape (61).

4. Agencement de commande selon la revendication 2 ou 3, **caractérisé en ce que** la tubulure d'évacuation (58.2) est dotée en outre d'un dispositif d'étranglement de débit (10) situé en aval du moyen de soupape (61).

5. Agencement de commande selon la revendication 4, **caractérisé en ce que** le dispositif d'étranglement (10) est commandé par l'unité de commande (62) pour l'effet d'étranglement.

6. Agencement de commande selon l'une quelconque des revendications précédentes, **caractérisé en ce que** le dispositif de pistons (53) est en liaison de transmission de force avec l'arbre à cames (4) via une partie de guide (56) et que la tubulure d'évacuation (58.2) est dotée d'un dispositif de soupapes (60) du moyen de soupape commandé électroniquement (61) indépendant sur le plan fonctionnel et dont le mode opérationnel dépend de la position de la partie de guide (56) par rapport à la partie de corps (51).

7. Agencement de commande selon la revendication 6, **caractérisé en ce que** la tubulure d'évacuation (58.2) est agencée pour se ramifier et que le dispositif de soupapes (60) est agencé dans une branche différente du moyen de soupape commandé électroniquement (61).
